# EUROPÄISCHE PATENTSCHRIFT

(11) **EP 2 299 560 B1**
(45) Veröffentlichungstag und Bekanntmachung des Hinweises auf die Patenterteilung: **07.11.2018**
(21) Anmeldenummer: 09170939.4
(22) Anmeldetag: 22.09.2009
(51) Int. Cl.: H02K 5/15, H02K 15/16

(54) **Verfahren zum Einbringen eines Rotors einer Synchronmaschine in den Stator oder zum Anordnen eines Rotors um einen Stator herum sowie Montagevorrichtung hierfür**
Method for inserting a rotor of a synchronous machine into the stator or for mounting a rotor around a stator and mounting device for same
Procédé d'introduction d'un rotor d'une machine synchrone dans le stator ou pour l'agencement d'un rotor autour d'un stator et son dispositif de montage correspondant

(43) Veröffentlichungstag der Anmeldung: 23.03.2011
(73) Patentinhaber: Baumüller Nürnberg GmbH, 90482 Nürnberg (DE)
(72) Erfinder: Braun, Joachim, 90411 Nürnberg (DE)
(74) Vertreter: Götz, Georg Alois

(56) Entgegenhaltungen:
- EP-A1- 1 672 770
- EP-A2- 0 358 945
- WO-A1-2004/030186
- DE-A1-102006 017 005
- JP-A- 3 049 549
- US-A- 4 955 128

## Beschreibung

Die Erfindung betrifft ein Verfahren zum Einbringen eines Rotors einer Synchronmaschine in den Innenbereich eines Stators oder zum Anordnen eines Rotors einer Synchronmaschine in einem Außenbereich um einen Stator herum bei der Montage der Synchronmaschine sowie eine Montagevorrichtung zum Einbringen eines Rotors einer Synchronmaschine in den Innenbereich eines Stators oder zum Anordnen eines Rotors in einem Außenbereich um einen Stator herum.

Beim Fügen von Rotoren, insbesondere großer Magnetläufer, in den Stator der zugehörigen Synchronmaschine besteht das Problem, dass durch die Magnete der Rotoren bzw. Läufer starke Anziehungskräfte zu ferromagnetischen Teilen in der Nähe der Läufer hervorgerufen werden. Da die Magnete der Rotoren außerdem sehr empfindlich sind, erfolgt bisher bei der Montage das Einfügen der Rotoren in den Innenbereich des Stators im Fall kleinerer Motoren wie beispielsweise bei Servomotoren derart, dass die Magnete mit einem geeigneten Material bandagiert und dann manuell in das Statorblechpaket hineingeschoben werden. Entsprechende Probleme entstehen, wenn es sich nicht um Innenläufer-, sondern um Außenläufermotoren handelt, bei denen der Rotor auf den Stator aufgeschoben, also in einem Außenbereich um den Stator herum angeordnet wird.

Bei großen Synchronläufern bzw. großen Magnetrotoren, beispielsweise bei Torque-Motoren, besteht jedoch das Problem, dass diese eine große Anzahl von Magneten aufweisen und deshalb in der Regel wegen der hohen magnetischen Zugkräfte und des hohen Gewichts der Rotoren ein manuelles Fügen nicht mehr möglich ist.

Daher werden bei größeren Maschinen zur Montage der Rotoren derzeit massive separate Linearführungen eingesetzt. Das Einbringen des Rotors in den Stator bei Innenläufern erfolgt beispielsweise mit einer großen Presse bzw. einer Spindel. Dies ist unter anderem insoweit problematisch, als dass keine Montage bzw. Demontage außerhalb spezifischer Fertigungsstätten möglich ist, auch nicht im Reparaturfall bzw. zum Lagertausch. Zudem ist die Montage mittels der Linearführungen vergleichsweise komplex bzw. erfordert den Einsatz aufwändiger Montageelemente. Aus der US 4,955,128 A ist ein Verfahren zum Einbringen eines Rotors in einen Stator bekannt, bei dem eine Beschädigung des Rotors durch Führungshilfen auf der Nichtantriebsseite des Stators verhindert wird. Nachteilig ist hierbei ein Fehlen von Vorrichtungen, die die zentrierte Anordnung des Rotors im Stator auch beim oder nach dem Entfernen der Führungshilfen gewährleisten. JP 3049549 A und WO 2004/030186 A1 messen daher beispielsweise nach dem Fügevorgang die Zentriertheit der Anordnung, ohne jedoch Mittel zur Verfügung zu stellen, diese zentrische axiale Ausrichtung auch tatsächlich zu erreichen.

Der Erfindung liegt damit die Aufgabe zugrunde, ein diesbezüglich verbessertes Verfahren zum Einbringen eines Rotors einer Synchronmaschine in den Innenbereich eines Stators oder zum Anordnen eines Rotors einer Synchronmaschine in einem Außenbereich um einen Stator herum bei der Montage der Synchronmaschine anzugeben.

Zur Lösung dieser Aufgabe ist erfindungsgemäß ein Verfahren gemäß Anspruch 1 bzw. eine Montagevorrichtung gemäß Anspruch 10 vorgesehen. Bevorzugte Ausführungen sind durch die Ansprüche 2 - 9 bzw. Ansprüche 11 - 14 beansprucht. Vorzugsweise wird als Führungselement wenigstens ein Führungsring, wenigstens eine Führungsrolle, wenigstens ein Führungsschuh oder wenigstens ein, zumindest im Wesentlichen, lokal oder punktuell oder durch direkte Berührung des Stators oder Rotors wirkendes Führungselement verwendet.

Demgemäß erfolgt das Fügen des Rotors, insbesondere für große Magnetläufer, in den Stator bzw. um den Stator herum nicht mehr anhand gegebenenfalls aufwändiger und unflexibler Linearführungen, bei denen es sich bezüglich der zu fügenden Bauteile um separate Anordnungen wie Schienen handelt, sondern auf einfache, sichere und flexible Art und Weise mit Hilfe von direkt dem Stator bzw. dem Rotor als den zu fügenden Bauteilen zugeordneten Führungselementen wie Führungsringen, -rollen oder dergleichen. Form, Größe und Material der Führungsringe bzw. -elemente lässt sich dabei so wählen, dass der Fügevorgang optimiert wird, insbesondere hinsichtlich der Wirkung der Magnetkräfte.

Dabei bezeichnet der Begriff "Führungsring" im Sinne der Erfindung nicht nur kreisrunde Elemente, sondern alle Führungsringen im weitesten Sinne vergleichbaren Führungselemente. Die erfindungsgemäßen Führungsringe können also selbstverständlich auch oval ausgebildet sein oder gegebenenfalls mit (abgerundeten) Ecken bzw. eine Mehreckform oder dergleichen aufweisen. Der den Ring bildende Materialstrang muss auch keinen kreisförmigen Querschnitt aufweisen, sondern kann abgeflacht sein bzw. Kanten und Fasen und andere Abweichungen von der Kreisform und dergleichen aufweisen, um ein optimiertes Einfügen des Rotors in das Statorblechpaket bzw. des Anordnen des Rotors um das Statorblechpakt herum zu ermöglichen. Selbstverständlich ist beispielsweise ebenso ein Anordnen des Rotors um das Statorblechpaket herum durch Einführen des Blechpakets in einen inneren bereich des Rotors von der Erfindung erfasst. Entscheidend ist, dass es sich bei den Führungsringen um Führungselemente handelt, die in der Art von (in der Regel eine geschlossene Form bildenden) Führungsringen eingesetzt werden, im Unterschied beispielsweise zu den erwähnten bekannten Führungsschienen für die Läufermontage.

Generell sind die Führungselemente im Sinne der Erfindung Führungselemente wie Ringe oder Rollen in direkter Verbindung mit dem Stator oder Rotor sind bzw. Führungselemente, an oder auf denen der Rotor im bzw. am Stator gleitet. Aufwändige separate Anordnungen wie Linearführungen mit berührungsloser Luftlagerung oder Fluidlagerung zur Gleit- oder Rollführung können entfallen. Die Führung erfolgt vielmehr durch die erfindungsgemäßen Führungselemente direkt am oder im Rotor bzw. Stator bzw. unter Kontaktierung des Rotors und Stators durch die Führungselemente. Dabei können erfindungsgemäß mit besonderem Vorteil auch eher lokal bzw. punktuell wirkende Führungselemente wie Ringe oder Rollen im Unterschied zum Beispiel zu langen Schienen, die die Einhaltung der Bewegungsrichtung über eine größere Distanz sichern müssen, zum Einsatz kommen.

Die erfindungsgemäßen Führungselemente wie zum Beispiel Führungsringe werden demgemäß, insbesondere für die Montage großer Synchronmotoren, an den zu montierenden Elementen, also am Stator bzw. Rotor, der im Fall eines Innenläufers in das Statorblech einzufügen ist, befestigt. Durch die Verwendung der erfindungsgemäßen Führungselemente ist eine Montage auch außerhalb der spezifischen Fertigungsstätten möglich, beispielsweise im Reparaturfall bzw. beim Lagertausch. Durch die Führungselemente bzw. -ringe am Stator oder Rotor wird eine Beschädigung der Läufer und insbesondere der Läufermagnete zuverlässig verhindert.

Beim erfindungsgemäßen Verfahren zur Montage der Synchronmaschine kann ein Rotor in den Innenbereich des zugehörigen Stators eingebracht oder in dem Außenbereich um den Stator herum angeordnet werden, der Magnete, insbesondere eine Vielzahl von Magneten oder Magnete aus Metallen der Seltenen Erden, mit hohen magnetischen Energiedichten oder eine große Masse oder ein großes Volumen aufweist oder mit einer Demontagehilfe, insbesondere angrenzend an einen Führungsring, versehen ist.

Das erfindungsgemäße Verfahren eignet sich also insbesondere für die Montage von Rotoren, an denen besonders viele Magnete vorgesehen sind, so dass eine hohe magnetische Energiedichte entsteht, bzw. deren Magnete beispielsweise Seltene-Erd-Magnete sind, die sehr spröde und schlagempfindlich sind. Insbesondere wird erfindungsgemäß durch die Verwendung der Führungselemente bzw. von Führungsringen und dergleichen am Stator bzw. Rotor die Montage von Rotoren mit einem großen Gewicht bzw. einem großen Volumen ermöglicht, die manuell nicht mehr durchzuführen wäre. Solche Rotoren haben eine im Vergleich zu kleinen Läufern von Servomotoren große Masse bzw. ein großes Volumen, wodurch dir manuelle Montage erschwert bzw. unmöglich wird. Des Weiteren können Demontagehilfen an den Rotoren vorgesehen sein, insbesondere, bei einer vertikalen Anordnung von Rotor und Stator (die Statoröffnung weist nach oben), angrenzend an bzw. oberhalb eines entsprechenden Führungselements wie eines Rings, einer Rolle oder eines Führungsschuhs.

Der Rotor wird mittels zweier beidseitig am Rotor befestigter Führungselemente eingebracht, oder der Rotor kann mittels wenigstens eines wenigstens eine Kontaktfläche für den Kontakt mit einem anderen Führungselement oder Elementen der Synchronmaschine aufweisenden Führungselements eingebracht werden.

Am Stator sind einseitig oder beidseitig (an den jeweiligen Enden bzw. in den Endbereichen des Stators) Führungselemente wie beispielsweise -ringe vorgesehen. Am Rotor, der in das Statorblech eingeschoben oder auf dieses aufgeschoben wird, sind beidseitig Führungselemente angeordnet, also jeweils eines am ersten bzw. oberen Ende und eines am zweiten bzw. unteren Ende des Rotors. Die Führungsringe oder andere Führungselemente sind so ausgelegt, dass sie bei der Montage Führungselemente des jeweils anderen Bauelements, also des Stators bzw. Rotors, kontaktieren bzw. in Kontakt mit dem jeweils anderen zu fügendem Element der Synchronmaschine treten, also ein Führungsring am Stator mit dem Rotor und umgekehrt. Eine Kontaktierung zwischen Führungselementen erfolgt in aller Regel während des Fügeprozesses (nur) zu Beginn. Im weiteren Verlauf des Fügeprozesses stehen die Führungselemente in der Regel in Kontakt mit dem anderen zu fügenden Motorbauteil. Eine direkte Kontaktierung zwischen Stator und Rotor, die zu einer Beschädigung beispielsweise der empfindlichen Rotormagnete führen könnte, wird so über den gesamten Verlauf des Fügeprozesses vermieden.

Die Führungselemente wie beispielsweise Führungsringe sind aus einem geeigneten weichen, elastischen bzw. flexiblen oder keine Oberflächenschäden hervorrufenden Material auszuführen. Wichtig für die Materialwahl ist, dass sich eine gute Gleitpaarung ergibt. Erfindungsgemäße Führungselemente wie zum Beispiel Rollen können aus Polyurethan, Polyamid oder Polyoxymethylen bestehen. Gleichzeitig müssen die Führungselemente jedoch so fest sein bzw. solche Verformungseigenschaften aufweisen, dass sie zuverlässig die direkte Kontaktierung von Stator und Rotor verhindern. Für die Führungselemente sind dementsprechend Materialien mit einer geeigneten elastischen Verformbarkeit und/oder mit einer geeigneten Größe und Form zu wählen.

Erfindungsgemäß kann der Rotor mittels wenigstens eines unmagnetischen Führungselements oder wenigstens eines Führungselements aus Kunststoff oder wenigstens eines Führungselements mit wenigstens einer Einführfase an einem Zentrierrand eingebracht oder angeordnet werden oder es kann wenigstens ein Führungselement vor dem Einbringen oder Anordnen des Rotors mittels wenigstens eines Befestigungselements, insbesondere wenigstens einer Schraube oder eines Sicherungselements oder Sicherungsrings, am Rotor oder Stator befestigt werden.

Zweckmäßigerweise sind die Führungselemente wie zum Beispiel Führungsringe unmagnetisch, um eine magnetische Wechselwirkung mit den Magneten des Läufers zu verhindern. Geeignete Kunststoffmaterialien können für die Gewährleistung der gewünschten Materialeigenschaften insbesondere hinsichtlich Plastizität bzw. Verformbarkeit sorgen. Die Befestigung der Führungselemente an den Maschinenelementen, insbesondere derart, dass diese Befestigung (zerstörungsfrei) wieder lösbar ist, um die Führungselemente nach der Montage ohne Probleme entfernen zu können, kann beispielsweise mit Schrauben oder Sicherungsringen erfolgen. Gegebenenfalls können auch unterschiedliche Befestigungsmittel kombiniert zum Einsatz kommen, beispielsweise Klemmen in Kombination mit Schrauben usw.

Weiterhin kann der Rotor mit wenigstens einer Bandage, insbesondere zum Schutz von Magneten des Rotors oder mit wenigstens einer Bandage, insbesondere zum Schutz von Magneten des Rotors oder mit wenigstens einer Bandage aus Gewebeband, eingebracht oder angeordnet werden oder der Stator kann für das Einbringen oder Anordnen des Rotors an einer Montagefläche, insbesondere an einem Montagetisch, befestigt werden, insbesondere, um ein Angezogenwerden oder Angehobenwerden des Stators durch Magnete des Rotors zu verhindern.

Der Vorteil der vertikalen Montage, also einer Montage derart, dass die bzw. eine Statoröffnung nach oben weist und der Rotor von oben in diese eingeschoben oder außen über den Stator geschoben wird, liegt darin, dass das Läufergewicht nicht mehr zusätzlich als Kraft auf eine Anlagefläche des Stators wirkt. Der Stator wird (in der vertikalen Position, in der z.B. bei einem im Wesentlichen zylindrischen Stator die Fläche des Außenmantels vertikal ausgerichtet ist und die Stirnflächen horizontal verlaufen) vorzugsweise an einem Montagetisch befestigt, um ein Anheben durch die während des Fügeprozesses wirkende Magnetkräfte der Magnete des Rotors zu verhindern. Die Befestigung erfolgt zweckmäßigerweise lösbar durch Schrauben und andere geeignete Befestigungsmittel. Eine Bandage beispielsweise aus Gewebeband kann verwendet werden, um beim Läufer die Oberflächenmagnete zuverlässig vor mechanischen Beschädigungen zu schützen. Der Rotor wird hierzu vollständig bzw. an empfindlichen Stellen mit der Bandage versehen bzw. umwickelt.

Im Rahmen des erfindungsgemäßen Verfahrens kann der Rotor mittels wenigstens eines Krans oder Hebezeugs, in den Innenbereich des Stators eingebracht oder in dem Außenbereich um den Stator herum angeordnet werden. Ein Kran bzw. eine Hebeeinrichtung ermöglichen ein problemloses Anheben des unter Umständen sehr schweren Rotors, wobei dieser mittels einer Steuerungseinrichtung des Krans bzw. Hebezeugs des Weiteren präzise in einer gewünschten, zum Einführen in bzw. Aufschieben auf das Statorblechpaket geeigneten Position platziert werden kann. Das Einfügen bzw. Aufschieben des Rotors in bzw. auf den Stator von oben kann aufgrund der Verwendung der Führungselemente erfolgen, ohne dass der Rotor bzw. eine diesen umgebende Bandage an dem Statorblech schleift. Dies sorgt dafür, dass weder eine unerwünschte Scherung noch Abrieb auftreten.

Der Innendurchmesser oder der Außendurchmesser wenigstens eines Führungselements wie beispielsweise eines Führungsrings bzw. eines ringähnlichen oder anderen Führungselements, für das sich ein Innen- und Außendurchmesser definieren lässt, können derart gewählt werden, dass Scherung oder Abrieb beim Einbringen des Rotors in den Innenbereich des Stators oder beim Anordnen des Rotors in dem Außenbereich um den Stator herum vermieden werden, oder die Breite wenigstens eines Führungselements kann derart gewählt werden, dass die magnetischen Zugkräfte erst wirken, wenn der Rotor bereits (durch den oder die Führungselemente) geführt wird. Die Innen- bzw. Außendurchmesser der Führungsringe bzw. anderer Führungselemente sind also vorzugsweise so ausgelegt, dass unerwünschte Scherungen und Abrieb am Rotor bzw. Stator vermieden werden, wobei selbstverständlich bei der Bestimmung der Durchmesser das jeweilige Material der Führungsringe oder -elemente bzw. die Materialeigenschaften zu berücksichtigen sind. Die Führungselemente sollten so breit sein, dass die magnetischen Zugkräfte bei der Überdeckung von Stator und Rotor erst wirken, wenn der Rotor bereits geführt wird, um so Beschädigungen bzw. Probleme beim Einführen zu vermeiden. Bei bekannten Rotor- und Statordimensionen bzw. -eigenschaften lassen sich die Führungselemente dementsprechend hinsichtlich ihrer Form, ihrer Durchmesser und ihrer Breite optimieren, so dass die Montage einfach, sicher und flexibel erfolgen kann. Gegebenenfalls können auch Sicherheiten für mögliche Abweichungen bzw. Fehler beim Montagevorgang einkalkuliert werden.

Nach einem vertikalen Einbringen oder Anordnen des Rotors können ein oder mehrere, bezogen auf die vertikale Lage, obere Führungselemente entfernt werden, insbesondere derart, dass sich der Rotor, vorzugsweise geführt durch wenigstens eine Einführfase am Zentrierrand des einen oder der mehreren Führungselemente, insbesondere eines Führungsrings, auf einer Seite des Stators anlegt.

Dies bedeutet, dass nach einem vertikalen Einbringen des Läufers die oberen Führungselemente, beispielsweise -ringe, entfernt werden, also diejenigen Führungselemente am Stator oder am Rotor, die sich bei der vertikalen Anordnung der zu fügenden Bauteile oben am jeweiligen Bauteil befinden, insbesondere am oberen Ende. Zum Entfernen der Führungselemente können entsprechende Befestigungsmittel wie Schrauben, Sicherungsringe oder dergleichen gelöst werden.

Der oder die Führungsringe bzw. andere geeignete Führungselemente weisen vorzugsweise Einführfasen auf, die dafür sorgen, dass sich der Rotor beim vorsichtigen Entfernen der oberen Führungselemente sanft auf einer Seite im Stator anlegt. Die oberen Führungselemente sind dabei vorzugsweise am oberen Ende des jeweiligen Bauteils befestigt. Sie können aber unter Umständen auch in einem oberen Bereich des Bauteils angeordnet sein, also gegebenenfalls nicht (ganz) am oberen Ende, sofern dadurch ein einfaches Entfernen der Führungselemente nicht behindert wird.

Nach dem Entfernen des einen oder der mehreren oberen Führungselemente kann auf der entsprechenden Seite des Stators wenigstens ein Lager oder ein Lagerschild montiert werden, wobei, insbesondere durch wenigstens eine Fase an einem Lagerschild, der Rotor zumindest einseitig wieder in eine Mittelstellung gebracht wird.

Bei einem Lagerschild handelt es sich um den hinteren bzw. vorderen Deckel eines Maschinengehäuses, der das Lager der Wellenenden des Rotors aufnimmt. Entsprechende, geeignet geformte Fasen am Lagerschild sorgen dafür, dass der Rotor, nachdem er sich auf einer Seite im Stator angelegt hat, weil die Führungsringe bzw. andere Führungselemente entfernt wurden, wieder in eine Mittelstellung gebracht wird. Das Montieren der Lager bzw. Lagerschilde auf der oberen und später auf der unteren Seite schließt schließlich die Montage der Synchronmaschine (weitgehend) ab.

Dementsprechend kann die Synchronmaschine nach dem vertikalen Einbringen oder Anordnen des Rotors oder dem Entfernen der einen oder mehreren oberen Führungselemente in eine horizontale Lage gebracht werden und ein oder mehrere, bezogen auf die vertikale Lage, untere Führungselemente können entfernt werden, insbesondere derart, dass sich der Rotor, vorzugsweise geführt durch wenigstens eine Einführfase am Zentrierrand des einen oder der mehreren Führungselemente, auf einer Seite des Stators anlegt.

Das Ensemble aus dem Stator und dem in den Stator eingebrachten Rotor kann somit im Rahmen des Montageverfahrens wieder auf die Seite (die Außenmantelfläche des Stators) gelegt werden und somit horizontal angeordnet werden, um so zu ermöglichen, die bei der vertikalen Anordnung unteren Führungselemente zu entfernen, also Führungselemente wie -ringe am unteren Ende bzw. im Bereich des unteren Endes des Stators oder Rotors. Vorzugsweise weisen die unteren Führungselemente wiederum Einführfasen am Zentrierrand auf, die dafür sorgen, dass sich der Rotor auch beim Entfernen der unteren Führungselemente sanft an einer Seite des Stators anlegt. Es ist zu beachten, dass es nicht unbedingt erforderlich ist, dass der Stator unterseitig einen Führungsring bzw. ein anderes Führungselement aufweist. Es reicht aus, wenn der Rotor beidseitig, also am in der vertikalen Anordnung oberen bzw. unteren Ende, mit Führungselementen versehen ist, von denen nun das untere entfernt werden kann. Selbstverständlich können, sofern die Entfernbarkeit gewährleistet werden kann, an einem Bauteil beispielsweise auch drei oder mehr führungsringähnliche Elemente vorgesehen sein.

Nach dem Entfernen des einen oder der mehreren unteren Führungselemente kann auf der entsprechenden Seite des Stators wenigstens ein Lager oder Lagerschild montiert werden, wobei, insbesondere durch wenigstens eine Fase an einem Lagerschild, der Rotor (bezogen auf die vorher untere Seite des Stators) wieder in eine Mittelstellung gebracht wird. Auch unterseitig wird somit der Rotor nach dem Entfernen der Führungselemente in einer horizontalen Anordnung durch die Montage des zweiten Lagers bzw. Lagerschilds wieder in die gewünschte Mittelposition überführt. Damit ist die Montage der Synchronmaschine (weitgehend bzw. vollständig) abgeschlossen, ohne dass Linearführungen und dergleichen separate Vorrichtungen nötig gewesen wären.

Das erfindungsgemäße Verfahren, das auf dem Einsatz von Führungselementen direkt an den zu fügenden Bauteilen basiert, ermöglicht somit eine sehr sichere und sehr flexibel einsetzbare Montage insbesondere für Maschinen mit großen Magnetläufern.

Darüber hinaus betrifft die Erfindung eine Montagevorrichtung zum Einbringen eines Rotors einer Synchronmaschine in den Innenbereich eines Stators oder zum Anordnen eines Rotors einer Synchronmaschine in einem Außenbereich um einen Stator herum, insbesondere gemäß einem Verfahren wie im Vorstehenden geschildert, wobei sich die Montagevorrichtung dadurch auszeichnet, dass sie ein einseitig am Stator oder zwei beidseitig am Stator und zwei beidseitig am Rotor befestigte Führungselemente aufweist, die dazu ausgebildet sind, das Einbringen oder Anordnen des Rotors zu ermöglichen. Vorzugsweise ist ein Führungselement als ein Führungsring, als eine Führungsrolle, als ein Führungsschuh oder als ein, zumindest im Wesentlichen, lokal oder punktuell oder durch direkte Berührung des Stators oder Rotors wirkendes Führungselement ausgebildet.

Die Montagevorrichtung umfasst somit als wesentliche Bestandteile Führungselemente wie beispielsweise Führungsringen ähnliche Führungselemente, die am Stator oder Rotor angeordnet bzw. befestigt sind, auf denen die zu fügenden Bauteile gegebenenfalls (unter Berührung) gleiten und die aufgrund ihrer Anbringung und ihrer Materialeigenschaften und Führungseigenschaften das problemlose Einbringen des Rotors in den Innenbereich des Statorblechpakets bzw. das Aufschieben des Rotors auf das Statorblechpaket ermöglichen.

Vorteilhafterweise kann wenigstens ein Führungselement wenigstens eine Kontaktfläche für den Kontakt mit einem anderen Führungselement oder Elementen der Synchronmaschine aufweisen oder es können, bezogen auf eine vertikale Lage bzw. Anordnung des Ensembles aus Stator und Rotor, wenigstens ein oberes oder unteres Führungselement am Stator oder Rotor vorgesehen sein.

Vorzugsweise sind am Rotor beidseitig Führungselemente, beispielsweise Führungsringe, vorgesehen, also direkt an beiden Enden bzw. auf beiden Seiten (des z.B. eine im Wesentlichen zylindrische äußere Form aufweisenden Rotors) am Mantel des Rotors im Grenzbereich zu den Stirnflächen, während am Stator gegebenenfalls nur einseitig, vorzugsweise an der Oberseite, um das sichere Einbringen oder Aufbringen des Rotors von oben zu ermöglichen, ein Führungselement vorgesehen sein kann.

Die Führungselemente sind so ausgebildet, dass sich beim Einbringen oder Anordnen des Rotors Kontaktflächen ergeben, über die der Kontakt mit anderen Führungselementen bzw. Elementen der Synchronmaschine hergestellt wird. Beispielsweise kann ein oberes Führungselement des Stators beim vertikalen Einbringen oder Aufschieben des Rotors zunächst in Kontakt mit dem unteren Führungselement, beim weiteren Ein-oder Aufschieben auch in Kontakt mit der Mantelfläche eines z.B. im Wesentlichen zylindrisch ausgebildeten Rotors treten. Die Materialeigenschaften, insbesondere die elastischen Eigenschaften, der Führungselemente sind entsprechend angepasst. Die Ausbildung von Kontaktbereichen an bzw. mit den Führungsringen verhindert bzw. mindert eine direkte Kontaktierung von Rotor und Stator, durch die gegebenenfalls Beschädigungen z.B. der Rotormagnete entstehen könnten.

Die Führungselemente sind vorzugsweise im seitlichen Endbereich der Bauteile, also beispielsweise am Übergang von einer Mantelfläche eines zylindrischen Stators bzw. Rotors zum Stirnflächenbereich um den Mantel herum, angeordnet. Insbesondere beim Stator können die Führungselemente gegebenenfalls auch oben bzw. unten auf der Grund- bzw. Deckfläche, die gegebenenfalls einen Innenbereich mit der Öffnung zum Einbringen des Rotors aufweist, angebracht sein, so dass sie gleichsam eine Verlängerung des Mantels bilden.

Wenigstens ein Führungselement der Montagevorrichtung kann unmagnetisch oder aus Kunststoff oder vom Stator oder Rotor entfernbar bzw. lösbar ausgebildet sein oder wenigstens ein Führungselement kann wenigstens eine Einführfase an einem Zentrierrand aufweisen oder wenigstens ein Führungselement kann mittels wenigstens eines Befestigungselements, insbesondere mittels wenigstens einer Schraube oder eines Sicherungselements oder Sicherungsrings, am Rotor oder Stator befestigt sein, insbesondere lösbar befestigt sein, oder wenigstens ein ringähnliches Führungselement kann einen Innendurchmesser oder Außendurchmesser derart aufweisen, dass beim Einbringen des Rotors in den Innenbereich des Stators oder beim Anordnen des Rotors in dem Außenbereich um den Stator herum Scherung oder Abrieb vermieden werden, oder wenigstens ein Führungselement kann eine Breite derart aufweisen, dass die magnetischen Zugkräfte erst wirken, wenn der Rotor bereits geführt wird.

Selbstverständlich ist es von Vorteil, wenn alle Führungselemente wie beispielsweise Führungsringe unmagnetisch sind, um Wechselwirkungen mit den Magneten des Rotors zuverlässig zu vermeiden. Die Führungselemente können (vollständig bzw. im Wesentlichen) aus Kunststoff ausgebildet sein und sind vorzugsweise so befestigt, dass ein einfaches Entfernen zum Abschluss der Montage möglich ist, beispielsweise durch das Lösen von Schrauben. Gegebenenfalls können auch Klemmen oder andere (lösbare) Befestigungsmittel zum Einsatz kommen. Die Durchmesser der Führungselemente bei solchen Elementen, bei denen sich ein Durchmesser definieren lässt, wie beispielsweise bei Ringen, sind so zu wählen, dass sie ein optimales Einbringen des Rotors in den Innenbereich des Statorblechpakets ermöglichen, insbesondere derart, dass es nicht zu Schervorgängen bzw. Abrieb kommt. Erst wenn die Führung durch den Führungsring bzw. andere Führungselemente greift, sollten die magnetischen Zugkräfte in signifikanter bzw. relevanter Form wirken können. Die Breite der Führungsringe bzw. Führungsovale oder dergleichen ist entsprechend zu wählen.

Schließlich kann die Montagevorrichtung eine Montagefläche, insbesondere in Form eines Montagetisches, oder wenigstens einen Kran oder wenigstens ein Hebezeug zum Einbringen des Rotors in den Innenbereich des Stators oder zum Anordnen des Rotors in einem Außenbereich um den Stator herum aufweisen.

Mit der erfindungsgemäßen Montagevorrichtung mit den Führungselementen, zugehörigen lösbaren Befestigungsmitteln, einem Montagetisch bzw. Kran kann die Montage von großen Magnetläufern bei Synchronmaschinen im Vergleich zu bisherigen Verfahren, die Linearführungen oder dergleichen separate Führungen verwenden, auf zuverlässige und sehr flexible Art und Weise erfolgen.

Weitere Vorteile, Merkmale und Einzelheiten der Erfindung ergeben sich anhand des folgenden Ausführungsbeispiels sowie aus den Zeichnungen. Dabei zeigen:
Fig. 1 Rotor und Stator in einer vertikalen Position vor dem Einbringen des Rotors in den Innenbereich des Stators gemäß einem erfindungsgemäßen Verfahren,
Fig. 2 die Phase des Einbringens des Rotors, bei der sich der obere Führungsring des Stators und der untere Führungsring des Rotors kontaktieren,
Fig. 3 u. Fig. 4 das weitere Einführen des Rotors und
Fig. 5 den vollständig in den Stator eingebrachten Rotor.

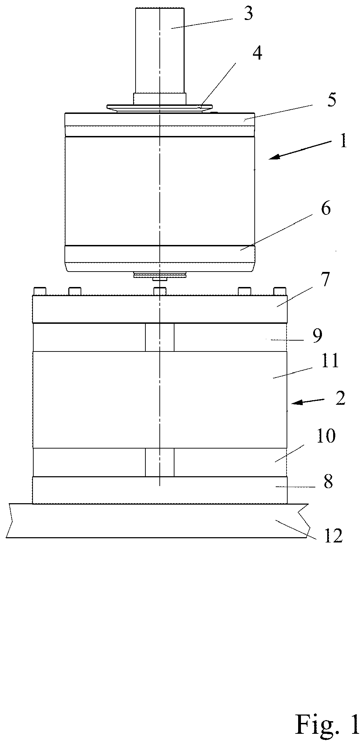

In der Fig. 1 sind Rotor 1 und Stator 2 in einer vertikalen Montageposition gezeigt, also in einer Anordnung, bei der die jeweiligen Mantelflächen aufrecht stehen. Die Figur zeigt die Situation vor dem Einbringen des Rotors 1 in den Innenbereich des Stators 2 gemäß einem erfindungsgemäßen Verfahren.

Der Rotor 1 weist neben der Welle 3 eine Demontagehilfe 4 auf, die sich oberhalb eines ersten als Führungsring ausgebildeten Führungselements 5 des Rotors 1 anschließt. Der Führungsring 5 befindet sich am oberen Ende, also im Bereich des Übergangs vom Mantel zur Stirnfläche, des Rotors 1. Des Weiteren weist der Rotor 1 einen zweiten Führungsring 6 auf, der als unterer Führungsring bzw. unteres Führungselement 6 am unteren Ende befestigt ist.

Die Führungsringe 5 und 6 sind ebenso wie die entsprechenden als Führungsringe ausgebildeten Führungselemente 7 und 8 des Stators mit Befestigungsmitteln wie Schrauben lösbar befestigt, so dass die Führungsringe 5, 6, 7, 8 einerseits beim Einbringen zuverlässig halten, andererseits zum Abschluss der Montage einfach entfernt werden können.

Der dritte Führungsring 7 ist an der Oberseite des Stators 2 vorgesehen, oberhalb eines Druckrings 9. Der vierte Führungsring 8 an der unteren Seite bzw. am unteren Ende des Stators 2 ist optional, muss also nicht zwangsläufig vorhanden sein. Oberhalb dieses vierten Führungsrings 8 ist wiederum ein Druckring 10 vorgesehen, wobei zwischen den beiden Druckringen 9 und 10 das Blechpaket 11 des Stators 2 zu erkennen ist. Die Führungsringe 5, 6, 7 und 8 bilden quasi einen oberen und unteren Abschluss der Mantelflächen des Rotors 1 bzw. Stators 2 im Übergang zu den Stirnflächen, sofern der Rotor 1 und Stator 2 wie hier eine im Wesentlichen zylindrische Grundform aufweisen, wobei der Stator 2 im Innenbereich, in den der Rotor 1 eingebracht wird, hohl ist.

Zur Vereinfachung der Montage findet diese unter Verwendung eines Montagetisches 12 statt, an dem der Stator 2 mit hier nicht gezeigten Befestigungsmitteln befestigt ist, um so zu verhindern, dass der Stator 2 durch die an der Oberfläche des Rotors 1 vorhandenen, hier aus Übersichtlichkeitsgründen ebenfalls nicht gezeigten Oberflächenmagnete angehoben wird. Das Einfügen des Rotors 1 erfolgt zweckmäßigerweise mit Hilfe eines hier nicht gezeigten Krans, der diesen in eine Position oberhalb des Stators 2 anhebt und so gesteuert werden kann, dass ein exaktes bzw. in einem gewissen Fehlerbereich genaues Einführen möglich ist.

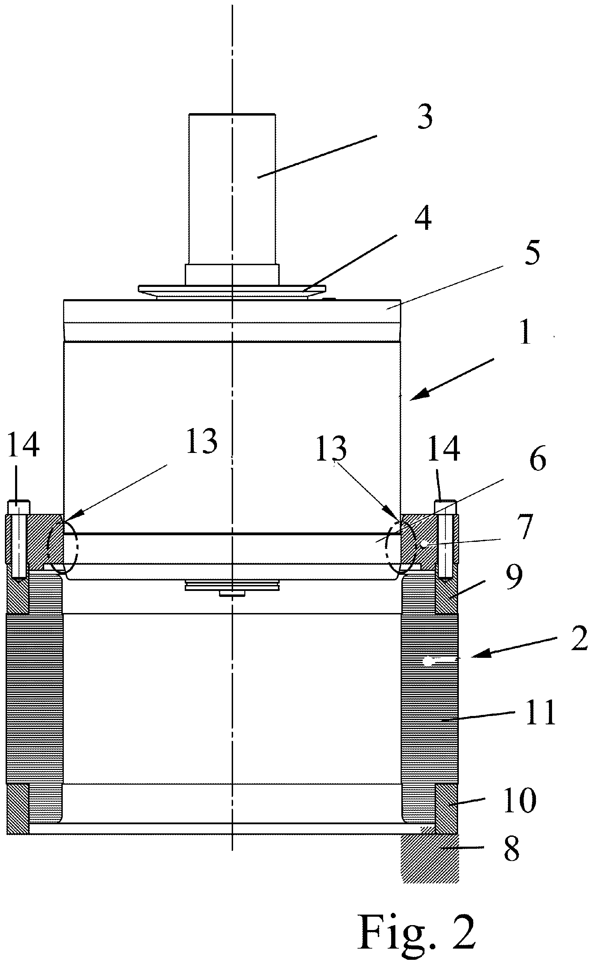

Die Fig. 2 zeigt schließlich die Phase des Einbringens des Rotors 1, bei der sich der obere Führungsring des Stators 2, also der dritte Führungsring 7, und der untere Führungsring des Rotors 1, also der zweite Führungsring 6, kontaktieren und sich zwischen beiden eine Kontaktfläche 13 ausbildet. Die Innen- bzw. Außendurchmesser und die Breite der Führungsringe 6, 7 sind dementsprechend so ausgebildet, dass das Einfügen des Rotors 1 in den Innenbereich des Stators 2 ohne das Auftreten von Schereffekten bzw. Abrieb (an den Maschinenbauteilen) möglich ist. Die magnetischen Zugkräfte wirken vorzugsweise erst, wenn der Rotor 1, wie hier gezeigt, bereits durch die Führungsringe 6 bzw. 7 geführt wird. Damit können Schäden, insbesondere an den empfindlichen Oberflächenmagneten des Rotors 1, vermieden werden.

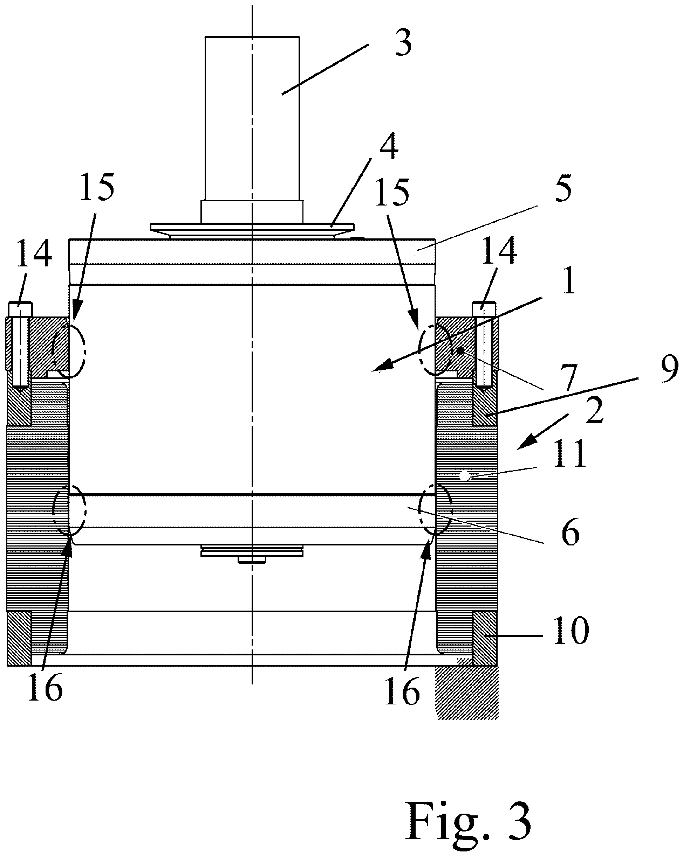

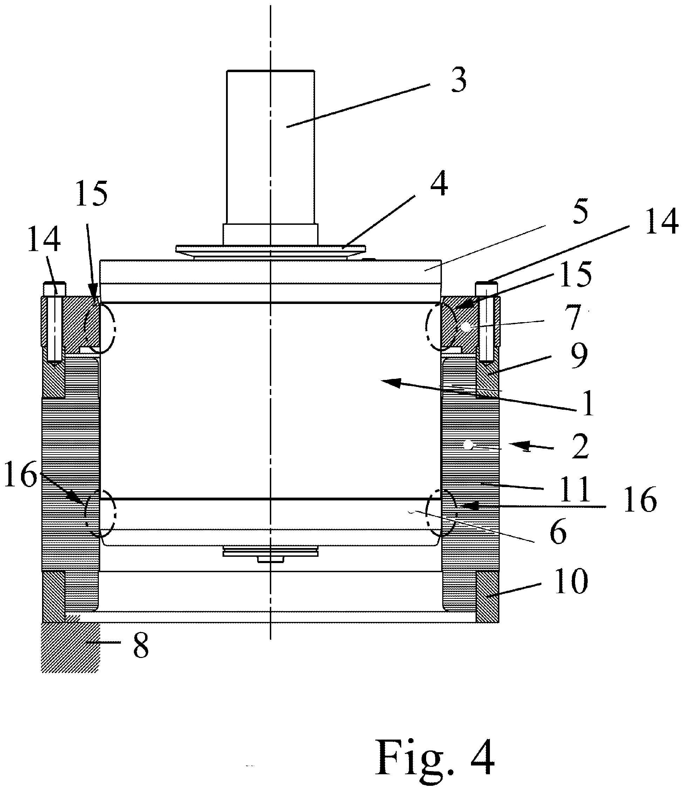

Die Figuren 3 und 4 zeigen das weitere Einführen des Rotors 1 in das Statorblechpaket 11.

In der Fig. 3 sind dabei wie bereits in der Fig. 2 Befestigungselemente 14 in Form von Schrauben zu sehen, die den Führungsring 7, also den dritten bzw. oberen Führungsring des Stators 2, am Stator 2 bzw. genauer am Druckring 9 sichern.

Da nun der Rotor 1 weiter in den Innenbereich des Stators 2 bzw. das Blechpaket 11 des Stators 2 eingeführt ist, ergibt sich eine neue Kontaktfläche 15, die sich zwischen dem dritten Führungsring 7 und dem Rotorkörper ausbildet. Des Weiteren entsteht eine Kontaktfläche 16 zwischen dem zweiten Führungsring 6 an der Unterseite des Rotors 1 und dem Blechpaket 11 des Stators 2. Durch die Führungsringe 5, 7 und 6 bzw. 8 ist somit auch im weiteren Verlauf der Montage bzw. des Einbringens des Rotors 1 in den Stator 2 ein zuverlässiger Schutz gegenüber unerwünschten Kontaktierungen bzw. direkten Kontaktierungen zwischen Rotor 1 und Stator 2 gegeben. Dies gilt auch für die Phase, wenn der Rotor 1 beinahe vollständig in den Stator 2 eingeführt ist, die in der Fig. 4 gezeigt ist.

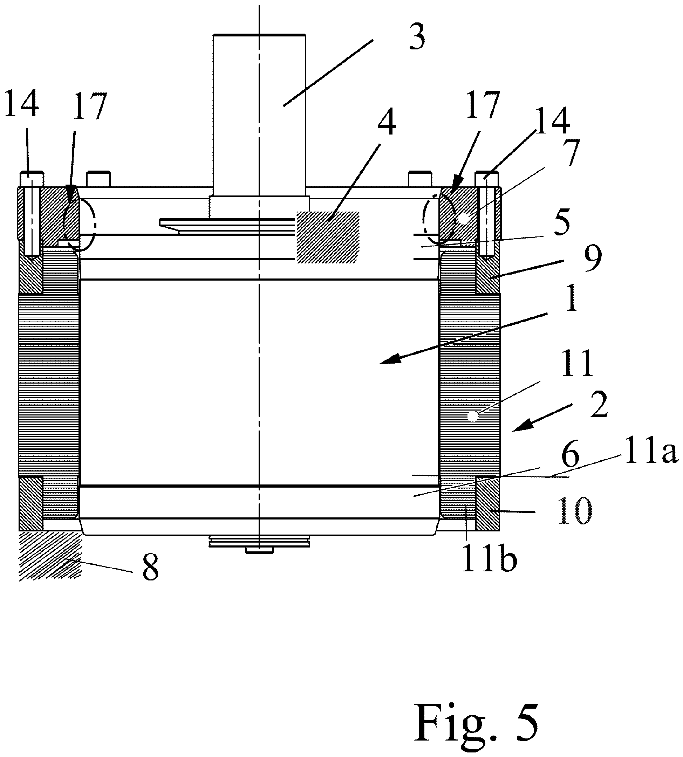

Beim Abschluss des Einbringens des Rotors 1 in den Stator 2 ergibt sich die in der Fig. 5 gezeigte Situation, bei der eine Kontaktfläche 17 zwischen dem dritten Führungsring 7 und einem oberen Bereich des Führungsrings 1 gegeben ist. Unterseitig sorgt der zweite Führungsring 6 für die Beabstandung zwischen Rotor 1 und Stator 2, sofern am Stator der untere optionale Führungsring 8 montiert ist. Zum besseren Verständnis des Aufbaus der Synchronmaschine ist in der Fig. 5 ergänzend eine Linie 11a am unteren Ende des Blechpakets 11 dargestellt, und der sich in der Darstellung unterhalb der Linie 11a anschließende Wickelkopf ist mit dem Bezugszeichen 11b gekennzeichnet.

Zum Abschluss der Montage können nun die oberen Führungsringe 5 bzw. 7 entfernt werden, wobei durch Einführfasen an den Zentrierrändern der Führungsringe 5, 7 beim Entfernen derselben ein sanftes Anlegen des Rotors 1 an eine entsprechende Seite im Stator 2 erfolgt. Durch die Montage der Lager bzw. Lagerschilde am oberen Ende der Synchronmaschine (vgl. die in der Fig. 5 angedeutete obere Abdeckung) wird der Rotor 1, vorzugsweise mittels einer entsprechenden Fase im Lagerschild, wieder in die gewünschte Mittelstellung gebracht. Die Montage kann dann fortgesetzt werden, nachdem das Gesamtsystem in eine horizontale Position gebracht wurde, so dass die jeweiligen unteren Führungsringe, nämlich der zweite Führungsring 6 und der vierte Führungsring 8 entfernt werden können. Nach dem Entfernen dieser unteren Führungsringe 6, 8 kann auf der unteren Seite ebenfalls die Montage des Lagers bzw. Lagerschilds derart erfolgen, dass der Rotor wieder in die Mittelstellung gebracht wird, wozu am unterseitigen Lagerschild vorzugsweise ebenfalls eine geeignete Fase vorgesehen ist. Damit ist die Montage der Synchronmaschine soweit abgeschlossen.

Das erfindungsgemäße Verfahren bzw. die erfindungsgemäße Montagevorrichtung bieten somit den Vorteil, dass eine Montage einfach, sicher und flexibel auch für große Synchronläufer bzw. Magnetläufer möglich ist, wobei die Montage und auch die Demontage bei Bedarf außerhalb der Fertigungsstätten erfolgen können, beispielsweise im Reparaturfall oder beim Lagertausch.

### Bezugszeichenliste

- 1: Rotor
- 2: Stator
- 3: Welle
- 4: Demontagehilfe
- 5: Führungselement (Führungsring)
- 6: Führungselement (Führungsring)
- 7: Führungselement (Führungsring)
- 8: Führungselement (Führungsring)
- 9: Druckring
- 10: Druckring
- 11: Blechpaket
- 11a: Linie unteres Ende Blechpaket
- 11b: Wickel kopf
- 12: Montagetisch
- 13: Kontaktfläche
- 14: Befestigungselemente
- 15: Kontaktfläche
- 16: Kontaktfläche
- 17: Kontaktfläche

## Patentansprüche

1. Verfahren zum Einbringen eines Rotors (1) einer Synchronmaschine in den Innenbereich eines Stators (2) oder zum Anordnen eines Rotors (1) einer Synchronmaschine in einem Außenbereich um einen Stator (2) herum bei der Montage der Synchronmaschine, wobei der Rotor (1) mittels eines einseitig am Stator (2) oder zweier beidseitig, nämlich an den jeweiligen Enden bzw. in den Endbereichen des Stators (2), am Stator (2) und zweier beidseitig, also jeweils eines am ersten bzw. oberen Ende und eines am zweiten bzw. unteren Ende des Rotors (1), am Rotor (1) befestigter Führungselemente (5, 6, 7, 8) eingebracht oder angeordnet wird und wobei nach einem vertikalen Einbringen oder Anordnen des Rotors (1) ein oder mehrere, bezogen auf die vertikale Lage, obere Führungselemente (5, 7) entfernt werden, insbesondere derart, dass sich der Rotor (1), vorzugsweise geführt durch wenigstens eine Einführfase an einem Zentrierrand des einen oder der mehreren Führungselemente (5, 7), auf einer Seite des Stators (2) anlegt, **dadurch gekennzeichnet, dass** die Synchronmaschine nach dem vertikalen Einbringen oder Anordnen des Rotors (1) oder dem Entfernen der einen oder mehreren oberen Führungselemente (5, 7) in eine horizontale Lage gebracht wird und ein oder mehrere, bezogen auf die vertikale Lage, untere Führungselemente (6, 8) entfernt werden, insbesondere derart, dass sich der Rotor (1), vorzugsweise geführt durch wenigstens eine Einführfase am Zentrierrand des einen oder der mehreren Führungselemente (6, 8), auf einer Seite des Stators anlegt und dass nach dem Entfernen des einen oder der mehreren unteren Führungselemente (6, 8) auf der entsprechenden Seite des Stators (2) wenigstens ein Lager oder Lagerschild montiert werden, wobei, insbesondere durch wenigstens eine Fase an einem Lagerschild, der Rotor (1) wieder in eine Mittelstellung gebracht wird.

2. Verfahren nach Anspruch 1, **dadurch gekennzeichnet, dass** als Führungselement (5, 6, 7, 8), wenigstens ein Führungsring (5, 6, 7, 8), wenigstens eine Führungsrolle, wenigstens ein Führungsschuh oder wenigstens ein durch direkte Berührung des Rotors (1) wirkendes Führungselement (5, 6, 7, 8) verwendet wird.

3. Verfahren nach Anspruch 1 oder 2, **dadurch gekennzeichnet, dass** im Rahmen des Verfahrens ein Rotor (1) in den Innenbereich des zugehörigen Stators (2) eingebracht oder in dem Außenbereich um den Stator herum angeordnet wird, der Magnete, insbesondere eine Vielzahl von Magneten oder Magnete aus Metallen der Seltenen Erden, mit hohen magnetischen Energiedichten oder eine große Masse oder ein großes Volumen aufweist oder mit einer Demontagehilfe (4), insbesondere angrenzend an einen Führungsring (5, 6, 7, 8), versehen ist.

4. Verfahren nach einem der vorangehenden Ansprüche, **dadurch gekennzeichnet, dass** der Rotor (1) mittels wenigstens eines wenigstens eine Kontaktfläche (13, 15, 16, 17) für den Kontakt mit einem anderen Führungselement (5, 6, 7, 8) oder Elementen der Synchronmaschine aufweisenden Führungselements (5, 6, 7, 8) eingebracht oder angeordnet wird.

5. Verfahren nach einem der vorangehenden Ansprüche, **dadurch gekennzeichnet, dass** der Rotor (1) mittels wenigstens eines unmagnetischen Führungselements (5, 6, 7, 8) oder wenigstens eines Führungselements (5, 6, 7, 8) aus Kunststoff oder wenigstens eines Führungselements (5, 6, 7, 8) mit wenigstens einer Einführfase an einem Zentrierrand eingebracht oder angeordnet wird oder dass wenigstens ein Führungselement (5, 6, 7, 8) vor dem Einbringen oder Anordnen des Rotors (1) mittels wenigstens eines Befestigungselements (14), insbesondere mittels wenigstens einer Schraube oder eines Sicherungselements oder Sicherungsrings, am Rotor (1) oder Stator (2) befestigt wird.

6. Verfahren nach einem der vorangehenden Ansprüche, **dadurch gekennzeichnet, dass** der Rotor (1) mit wenigstens einer Bandage, insbesondere zum Schutz von Magneten des Rotors (1) oder mit wenigstens einer Bandage aus Gewebeband, eingebracht oder angeordnet wird oder dass der Stator (2) für das Einbringen oder Anordnen des Rotors (1) an einer Montagefläche, insbesondere an einem Montagetisch (12), befestigt wird, insbesondere, um ein Angezogenwerden oder Angehobenwerden des Stators (2) durch Magnete des Rotors (1) zu verhindern.

7. Verfahren nach einem der vorangehenden Ansprüche, **dadurch gekennzeichnet, dass** der Rotor (1) mittels wenigstens eines Krans oder Hebezeugs, in den Innenbereich des Stators (2) eingebracht oder in dem Außenbereich um den Stator (2) herum angeordnet wird.

8. Verfahren nach einem der vorangehenden Ansprüche, **dadurch gekennzeichnet, dass** der Innendurchmesser oder der Außendurchmesser wenigstens eines ringähnlichen Führungselements (5, 6, 7, 8) derart gewählt werden, dass Scherung oder Abrieb beim Einbringen des Rotors (1) in den Innenbereich des Stators (2) oder beim Anordnen des Rotors (1) in dem Außenbereich um den Stator (2) herum vermieden werden, oder dass die Breite wenigstens eines Führungselements (5, 6, 7, 8) derart gewählt wird, dass die magnetischen Zugkräfte erst wirken, wenn der Rotor (1) bereits geführt wird.

9. Verfahren nach einem der vorangehenden Ansprüche, **dadurch gekennzeichnet, dass** nach dem Entfernen des einen oder der mehreren oberen Führungselemente (5, 7) auf der entsprechenden Seite des Stators (2) wenigstens ein Lager und/oder Lagerschild montiert werden, wobei, insbesondere durch wenigstens eine Fase an einem Lagerschild, der Rotor (1) auf dieser Seite wieder in eine Mittelstellung gebracht wird.

10. Montagevorrichtung zum Einbringen eines Rotors (1) einer Synchronmaschine in den Innenbereich eines Stators (2) oder zum Anordnen eines Rotors (1) einer Synchronmaschine in einem Außenbereich um einen Stator (2) herum, insbesondere gemäß einem Verfahren nach einem der vorangehenden Ansprüche, wobei die Montagevorrichtung ein einseitig am Stator (2) oder zwei beidseitig, an den jeweiligen Enden bzw. in den Endbereichen des Stators (2), am Stator (2) und zwei beidseitig, also jeweils eines am ersten bzw. oberen Ende und eines am zweiten bzw. unteren Ende des Rotors (1) am Rotor (1), befestigte Führungselemente (5, 6, 7, 8) aufweist, die dazu ausgebildet sind, das Einbringen oder Anordnen des Rotors (1) zu ermöglichen und wobei nach einem vertikalen Einbringen oder Anordnen des Rotors (1) ein oder mehrere, bezogen auf die vertikale Lage, obere Führungselemente (5, 7) entfernbar sind, insbesondere derart, dass der Rotor (1), vorzugsweise geführt durch wenigstens eine Einführfase an einem Zentrierrand des einen oder der mehreren Führungselemente (5, 7), auf einer Seite des Stators (2) anlegbar ist, **dadurch gekennzeichnet, dass** die Synchronmaschine nach dem vertikalen Einbringen oder Anordnen des Rotors (1) oder dem Entfernen der einen oder mehreren oberen Führungselemente (5, 7) in eine horizontale Lage bringbar ist und ein oder mehrere, bezogen auf die vertikale Lage, untere Führungselemente (6, 8) entfernbar sind, insbesondere derart, dass der Rotor (1), vorzugsweise geführt durch wenigstens eine Einführfase am Zentrierrand des einen oder der mehreren Führungselemente (6, 8), auf einer Seite des Stators anlegbar ist und dass nach dem Entfernen des einen oder der mehreren unteren Führungselemente (6, 8) auf der entsprechenden Seite des Stators (2) wenigstens ein Lager oder Lagerschild montierbar sind, wobei, insbesondere durch wenigstens eine Fase an einem Lagerschild, der Rotor (1) wieder in eine Mittelstellung bringbar ist.

11. Montagevorrichtung nach Anspruch 10, **dadurch gekennzeichnet, dass** das Führungselement (5, 6, 7, 8) als Führungsring (5, 6, 7, 8), Führungsrolle, Führungsschuh oder wenigstens ein durch direkte Berührung des Stators (2) oder Rotors (1) wirkendes Führungselement (5, 6, 7, 8) ausgebildet ist.

12. Montagevorrichtung nach einem der Ansprüche 10 oder 11, **dadurch gekennzeichnet, dass** wenigstens ein Führungselement (5, 6, 7, 8) wenigstens eine Kontaktfläche (13, 15, 16, 17) für den Kontakt mit einem anderen Führungselement (5, 6, 7, 8) oder Elementen der Synchronmaschine aufweist oder dass, bezogen auf eine vertikale Lage, wenigstens ein oberes oder unteres Führungselement (5, 6, 7, 8) am Stator (2) oder Rotor (1) vorgesehen sind.

13. Montagevorrichtung nach einem der Ansprüche 10 bis 12, **dadurch gekennzeichnet, dass** wenigstens ein Führungselement (5, 6, 7, 8) unmagnetisch oder aus Kunststoff oder vom Stator (2) oder Rotor (1) entfernbar ausgebildet ist oder dass wenigstens ein Führungselement (5, 6, 7, 8) wenigstens eine Einführfase an einem Zentrierrand aufweist oder dass wenigstens ein Führungselement (5, 6, 7, 8) mittels wenigstens eines Befestigungselements (14), insbesondere mittels wenigstens einer Schraube oder eines Sicherungselements oder eines Sicherungsrings, am Rotor (1) oder Stator (2) befestigt ist, insbesondere lösbar befestigt ist, oder dass wenigstens ein ringähnliches Führungselement (5, 6, 7, 8) einen Innendurchmesser oder Außendurchmesser derart aufweist, dass Scherung oder Abrieb beim Einbringen des Rotors (1) in den Innenbereich des Stators (2) oder beim Anordnen des Rotors (1) in dem Außenbereich um den Stator (2) herum vermieden werden, oder dass wenigstens ein Führungselement (5, 6, 7, 8) eine Breite derart aufweist, dass die magnetischen Zugkräfte erst wirken, wenn der Rotor (1) bereits geführt wird.

14. Montagevorrichtung nach einem der Ansprüche 10 bis 13, **dadurch gekennzeichnet, dass** die Montagevorrichtung eine Montagefläche, insbesondere einen Montagetisch (12), oder wenigstens einen Kran oder ein Hebezeug zum Einbringen des Rotors (1) in den Innenbereich des Stators (2) oder zum Anordnen des Rotors (1) in einem Außenbereich um den Stator (2) herum aufweist.

## Claims

1. Method for inserting a rotor (1) of a synchronous machine into an interior portion of a stator (2) or for arranging a rotor (1) of a synchronous machine in an exterior portion around a stator (2) when assembling the synchronous machine, wherein the rotor (1) is inserted or arranged on the stator by means of guide elements (5,6,7,8), one fastened on one side on the stator (2) or two on either side, namely at the respective ends or in the end portions of the stator (2), and two guide elements (5,6,7,8) fastened on the rotor, thus respectively one at the first or upper end and one at the second or lower end of the rotor (1), and wherein, after the vertical insertion or arrangement of the rotor (1), one or multiple upper guide elements (5,7), in relation to the vertical position, are removed, in particular so that the rotor (1), preferably guided by at least one insertion chamfer at a centring rim of the one or multiple guide elements (5,7) on one side of the stator (2), **characterised in that** the synchronous machine, after the vertical insertion or arrangement of the rotor (1) or the removal of the one or multiple upper guide elements (5, 7), is brought into a horizontal position and one or multiple lower guide elements (6, 8) are removed in particular so that the rotor (1), preferably guided by at least one insertion chamfer on the centring rim of the one or the multiple guide elements (6, 8), locates on one side of the stator and that, after removal of the one or multiple lower guide elements (6, 8) on the corresponding side of the stator (2), at least one bearing or bearing plate is fitted wherein, in particular due to at least one chamfer on a bearing plate, the rotor (1) is returned to a central position.

2. Method according to claim 1, **characterised in that**, as guide element (5, 6, 7, 8), at least one guide ring (5, 6, 7, 8), at least one guide roller, at least one guide shoe or at least one guide element (5, 6, 7, 8), acting by direct contact of the rotor (1) is used.

3. Method according to claim 1 or 2, **characterised in that**, within the scope of the method, a rotor (1) is introduced into the interior portion of the associated stator (2) or is arranged in the exterior portion around the stator, which is provided with magnets, in particular a multiplicity of magnets or magnets of metals of the rare earths, which have high magnetic energy densities or a large mass or a large volume, or is provided with a disassembly aid (4), in particular abutting a guide ring (5, 6, 7, 8),

4. Method according to one of the preceding claims, **characterised in that** the rotor (1) is inserted or arranged by means of at least one guide element (5, 6, 7, 8) having at least one contact surface (13, 15, 16, 17) for contact with another guide element (5,6,7,8) or guide elements (5,6,7,8) comprising elements of the synchronous machine.

5. Method according to one of the preceding claims, **characterised in that** the rotor (1) is inserted or arranged by means of at least one non-magnetic guide element (5, 6, 7, 8) or at least one guide element (5, 6, 7, 8) of plastic or at least one guide element (5, 6, 7, 8) with at least one insertion chamfer on a centring rim or that at least one guide element (5, 6, 7, 8) is fastened on the rotor (1) or stator (2) before the insertion or arrangement of the rotor (1) by means of at least one fastening element (14), in particular by means of one screw or a securing element or securing ring.

6. Method according to one of the preceding claims, **characterised in that** the rotor (1) is inserted or arranged with at least one bandage, in particular for protecting magnets of the rotor (1), or with at least one bandage of fabric tape or that the stator (2), for the insertion or arrangement of the rotor (1) is fastened to a mounting surface, in particular to a mounting table (12), in particular to prevent an attraction or elevation of the stator (2) by magnets of the rotor (1).

7. Method according to one of the preceding claims, **characterised in that** the rotor (1) is inserted into the interior portion of the stator (2) or is arranged in the exterior portion around the stator (2) by means of at least one crane or lifting device.

8. Method according to one of the preceding claims, **characterised in that** the inside diameter or outside diameter of at least one ring-like guide element (5, 6, 7, 8) such chosen so that shear or abrasion during insertion of the rotor (1) into the interior portion of the stator (2) or gearing arrangement of the rotor (1) in the exterior portion around the stator (2) are avoided, or that the width of a least one guide element (5, 6, 7, 8) is chosen so that the magnetic attraction forces only act when the rotor (1) has already being guided.

9. Method according to one of the preceding claims, **characterised in that**, after removal of the one or multiple upper guide elements (5, 7) on the corresponding side of the stator (2) at least one bearing and/or bearing plate is mounted, wherein, in particular due to at least one chamfer on a bearing plate, the rotor (1) is brought back to a central position on this side.

10. Mounting device for insertion of a rotor (1) of a synchronous machine into the interior portion of a stator (2) or for arranging a rotor (1) of a synchronous machine in an exterior portion around a stator (2), in particular in accordance with one of the methods of the preceding claims, wherein the mounting device comprises guide elements (5,6,7,8) on the stator (2), one on one side or two on either side, thus at the respective ends or in the end portions of the stator (2), and two on either side on the rotor (1), thus respectively one at the first or upper end and one at the second or lower end of the rotor (1), which are configured to facilitate insertion or arrangement of the rotor (1) and wherein, after vertical insertion or arrangement of the rotor (1), one or multiple upper guide elements (5,7), in relation to the vertical position are removable, in particular so that the rotor (1), preferably guided by at least one insertion chamfer on a centring rim of the one or multiple guide elements (5, 7), can be located on one side of the stator (2), **characterised in that**, after the vertical insertion or arrangement of the rotor (1), or the removal of the one or multiple guide elements (5,7), the synchronous machine can be brought into a horizontal position and one or multiple lower guide elements (6,8), in relation to the vertical position can be removed, in particular so that the rotor (1), preferably guided by at least one insertion chamfer on the centring rim of the one or multiple guide elements (6, 8), can be located on one side of the stator and that, after the removal of the one or multiple lower guide elements (6, 8), at least one bearing or bearing plate can be mounted on the corresponding side of the stator (2), wherein, the rotor (1) can be brought again into a central position, in particular by at least one chamfer on a bearing plate.

11. Mounting device according to claim 10, **characterised in that** the guide element (5, 6, 7, 8) is configured as guide ring (5, 6, 7, 8), guide roller, guide shoe or at least one guide element (5, 6, 7, 8) acting by direct contact of the stator (2) or rotors (1).

12. Mounting device according to one of the claims 10 or 11, **characterised in that** at least one guide element (5, 6, 7, 8) has at least one contact surface (13, 15, 16, 17) for contact with another guide element (5, 6, 7, 8) or elements of the synchronous machine or that, in relation to a vertical position, at least one upper or lower guide element (5, 6, 7, 8) is provided on the stator (2) or rotor (1).

13. Mounting device according to one of the claims 10 to 12, **characterised in that** at least one guide element (5, 6, 7, 8) is non-magnetic or of plastic or is configured to be removable from the stator (2) or rotor (1) or that at least one guide element (5, 6, 7, 8) has at least one insertion chamfer on a centring rim, or that at least one guide element (5, 6, 7, 8) is fastened on the rotor (1) or stator (2), in particular releasably, by means of at least one fastening element (14), in particular by means of at least one screw or a securing element, or that at least one ring-like guide element (5,6,7,8) has an inside diameter or an outside diameter such that shearing or abrasion is avoided when the rotor (1) is inserted into the interior portion of the stator (2) or when the rotor (1) is arranged in the exterior portion around the stator (2), or that at least one guide element (5, 6, 7, 8) is of such a width that the magnetic tensile forces only act when the rotor (1) is already guided.

14. Mounting device according to one of the claims 10 to 13, **characterised in that** the mounting device has a mounting surface, in particular a mounting table (12), or at least one crane or a lifting device for insertion of the rotor (1) into the interior portion of the stator (2) or for arranging the rotor (1) in an exterior portion around the stator (2).

## Revendications

1. Procédé pour introduire un rotor (1) d'une machine synchrone dans l'espace intérieur d'un stator (2) ou pour agencer un rotor (1) d'une machine synchrone dans l'espace extérieur autour d'un stator (2) lors de l'assemblage de la machine synchrone, dans lequel le rotor (1) est introduit ou agencé au moyen d'éléments de guidage (5, 6, 7, 8), un élément de guidage fixé d'un côté sur le stator (2) ou deux éléments de guidage fixés sur les deux côtés sur le stator (2), à savoir sur chaque extrémité ou chaque espace d'extrémité du stator (2), et deux éléments de guidage fixés sur les deux côtés sur le rotor (1), également respectivement un élément de guidage sur une première extrémité ou extrémité supérieure et un élément de guidage sur une seconde extrémité ou extrémité inférieure du rotor (1), et dans lequel après une introduction ou disposition verticale du rotor (1) on élimine un ou plusieurs éléments de guidage supérieurs (5, 7) par rapport à la position verticale, en particulier de façon que le rotor (1) soit guidé sur un côté du stator (2) de préférence par au moins un chanfrein selon un bord de centrage d'un ou plusieurs des éléments de guidage (5, 7), **caractérisé en ce que**, après l'introduction ou l'agencement vertical du rotor (1) ou l'enlèvement du ou des éléments de guidage supérieurs (5, 7), on amène la machine synchrone dans une position horizontale et on enlève un ou plusieurs éléments de guidage (6, 8) inférieurs par rapport à la position verticale, en particulier de façon que le rotor (1) soit guidé sur un côté du stator de préférence par au moins un chanfrein selon un bord de centrage d'un ou plusieurs des éléments de guidage (6, 8) et de façon que, après l'enlèvement du ou des éléments de guidage inférieurs (6, 8) sur le côté correspondant du stator (2), on monte au moins un palier ou un flasque, dans lequel le rotor (1) est ramené en position médiane en particulier au moyen d'au moins un chanfrein sur un flasque.

2. Procédé selon la revendication 1, **caractérisé en ce qu'**on utilise, en tant qu'élément de guidage (5, 6, 7, 8), au moins une bague de guidage (5, 6, 7, 8), au moins un rouleau de guidage, au moins un sabot de guidage ou au moins un élément de guidage (5, 6, 7, 8) en contact direct avec le rotor (1) en fonctionnement.

3. Procédé selon la revendication 1 ou la revendication 2, **caractérisé en ce que**, dans le cadre du procédé, un rotor (1) est introduit dans l'espace intérieur du stator (2) associé ou est disposé dans l'espace extérieur autour du stator (2), les aimants comprennent en particulier une pluralité d'aimants ou des aimants en métaux des terres rares, ayant des densités d'énergie magnétique élevées ou une grande masse ou un volume important, ou les aimants sont associés à un auxiliaire de démontage (4), en particulier adjacent à une bague de guidage (5, 6, 7, 8).

4. Procédé selon l'une quelconque des revendications précédentes, **caractérisé en ce que** le rotor (1) est introduit ou disposé au moyen d'au moins un élément de guidage (5, 6, 7, 8) comportant au moins une surface de contact (13, 15, 16, 17) pour le contact avec un autre élément de guidage (5, 6, 7, 8) ou avec des éléments de la machine synchrone.

5. Procédé selon l'une quelconque des revendications précédentes, **caractérisé en ce que** le rotor (1) est introduit ou disposé au moyen d'au moins un élément de guidage (5, 6, 7, 8) non magnétique ou d'au moins un élément de guidage (5, 6, 7, 8) en matière plastique ou d'au moins un élément de guidage (5, 6, 7, 8) ayant au moins un chanfrein sur un bord de centrage, ou **en ce que** au moins un élément de guidage (5, 6, 7, 8) est monté sur le rotor (1) ou sur le stator (2) avant l'introduction ou la disposition du rotor (1) au moyen d'au moins un élément de fixation (14), en particulier au moyen d'au moins une vis ou d'un moyen de blocage ou d'une bague de blocage.

6. Procédé selon l'une quelconque des revendications précédentes, **caractérisé en ce que** le rotor (1) est introduit ou disposé au moyen d'au moins un bandage, en particulier pour la protection des aimants du rotor (1) ou avec au moins un bandage en bande de tissu, ou **en ce que** le stator (2) pour l'introduction ou la disposition du rotor (1) comprend une surface de montage, en particulier une table de montage (12), en particulier pour empêcher l'attraction ou le soulèvement du stator (2) par l'effet des aimants du rotor (1).

7. Procédé selon l'une quelconque des revendications précédentes, **caractérisé en ce que** le rotor (1) est introduit dans l'espace intérieur du stator (2) ou est engagé dans l'espace extérieur autour du stator (2) au moyen d'au moins une grue ou engin de levage.

8. Procédé selon l'une quelconque des revendications précédentes, **caractérisé en ce que** le diamètre intérieur ou le diamètre extérieur d'au moins un élément de guidage (5, 6, 7, 8) en forme d'anneau est choisi de façon à éviter l'engagement ou la sortie lors de l'introduction du rotor (1) dans l'espace intérieur du stator (2) ou lors de l'adaptation du rotor (1) dans l'espace extérieur autour du stator (2), ou **en ce que** la largeur d'au moins un élément de guidage (5, 6, 7, 8) est choisie de façon que les forces d'attraction magnétique agissent seulement lorsque le rotor (1) est déjà guidé.

9. Procédé selon l'une quelconque des revendications précédentes, **caractérisé en ce que** après l'enlèvement du ou des éléments de guidage supérieurs (5, 7) sur le côté correspondant du stator (2) on monte au moins un palier et/ou un flasque, de façon que, en particulier par l'effet d'au moins un chanfrein sur le flasque, le rotor (1) est ramené de ce côté en position médiane.

10. Dispositif de montage pour introduire un rotor (1) d'une machine synchrone dans l'espace intérieur d'un stator (2) ou pour agencer un rotor (1) d'une machine synchrone dans l'espace extérieur autour d'un stator (2), en particulier selon un procédé selon l'une quelconque des revendications précédentes, dans lequel le dispositif de montage comprend des éléments de guidage (5, 6, 7, 8), un élément de guidage fixé d'un côté sur le stator (2) ou deux éléments de guidage fixés sur les deux côtés sur le stator (2), à savoir sur chaque extrémité ou chaque espace d'extrémité du stator (2), et sur les deux côtés sur le rotor (1), également respectivement un sur une première extrémité ou extrémité supérieure et un sur une seconde extrémité ou extrémité inférieure du rotor (1), lesquels éléments de guidage sont formés de façon à permettre l'introduction ou l'engagement du rotor (1), et dans lequel après une introduction ou disposition verticale du rotor (1) un ou plusieurs éléments de guidage supérieurs (5, 7) par rapport à la position verticale peuvent être éliminés, en particulier de façon que le rotor (1) puisse être guidé sur un côté du stator (2) de préférence par au moins un chanfrein selon un bord de centrage d'un ou plusieurs des éléments de guidage (5, 7), **caractérisé en ce que**, après l'introduction ou l'agencement vertical du rotor (1) ou l'enlèvement du ou des éléments de guidage supérieurs (5, 7), la machine synchrone peut être amenée dans une position horizontale et un ou plusieurs éléments de guidage (6, 8) inférieurs par rapport à la position verticale peuvent être enlevés, en particulier de façon que le rotor (1) puisse être guidé sur un côté du stator de préférence par au moins un chanfrein selon un bord de centrage d'un ou plusieurs des éléments de guidage (6, 8) et de façon que, après l'enlèvement du ou des éléments de guidage inférieurs (6, 8), au moins un palier ou un flasque puisse être monté, dans lequel le rotor (1) peut être ramené en position médiane en particulier au moyen d'au moins un chanfrein sur un flasque.

11. Dispositif de montage selon la revendication 10, **caractérisé en ce que** l'élément de guidage (5, 6, 7, 8) est sous forme d'une bague de guidage (5, 6, 7, 8), d'un rouleau de guidage, d'un sabot de guidage ou d'au moins un élément de guidage (5, 6, 7, 8) en contact direct du stator (2) ou du rotor (1) en fonctionnement.

12. Dispositif de montage selon l'une des revendications 10 ou 11, **caractérisé en ce qu'**il comprend au moins un élément de guidage (5, 6, 7, 8), au moins une surface de contact (13, 15, 16, 17) pour le contact avec un autre élément de guidage (5, 6, 7, 8) ou avec des éléments de la machine synchrone, ou **en ce qu'**on prévoit, par rapport à une direction verticale, au moins un élément de guidage (5, 6, 7, 8) au-dessus ou au-dessous sur le stator (2) ou sur le rotor (1).

13. Dispositif de montage selon l'une quelconque des revendications 10 à 12, **caractérisé en ce que** au moins un élément de guidage (5, 6, 7, 8) non magnétique ou en matière plastique est monté de manière amovible sur le stator (2) ou sur le rotor (1), ou **en ce que** au moins un élément de guidage (5, 6, 7, 8) comprend au moins un chanfrein sur un bord de centrage, ou **en ce que** au moins un élément de guidage (5, 6, 7, 8) est monté sur le rotor (1) ou sur le stator (2), en particulier est monté de manière amovible, au moyen d'au moins un élément de fixation (14), en particulier au moyen d'au moins une vis ou d'un moyen de blocage ou d'une bague de blocage, ou **en ce que** au moins un élément de guidage (5, 6, 7, 8) en forme d'anneau présente un diamètre intérieur ou un diamètre extérieur choisi de façon à éviter l'engagement ou la sortie lors de l'introduction du rotor (1) dans l'espace intérieur du stator (2) ou lors de l'adaptation du rotor (1) dans l'espace extérieur autour du stator (2), ou **en ce que** au moins un élément de guidage (5, 6, 7, 8) présente une largeur choisie de façon que les forces d'attraction magnétique agissent seulement lorsque le rotor (1) est déjà guidé.

14. Dispositif de montage selon l'une quelconque des revendications 10 à 13, **caractérisé en ce que** le dispositif de montage comprend une surface de montage, en particulier une table de montage (12), ou au moins une grue ou engin de levage pour introduire le rotor (1) dans l'espace intérieur du stator (2) ou pour engager le rotor (1) dans l'espace extérieur autour du stator (2).
